# EUROPÄISCHE PATENTSCHRIFT

(11) **EP 3 978 977 B1**
(45) Veröffentlichungstag und Bekanntmachung des Hinweises auf die Patenterteilung: **02.04.2025**
(21) Anmeldenummer: 21198619.5
(22) Anmeldetag: 23.09.2021
(51) Int. Cl.: G02B 6/44, F16L 55/38, B65H 1/16, H02G 1/08, G02B 6/52

(54) **AUFNAHMEVORRICHTUNG**
HOLDING DEVICE
DISPOSITIF DE RÉCEPTION

(30) Priorität: 02.10.2020 DE 202020105660 U
(43) Veröffentlichungstag der Anmeldung: 06.04.2022
(73) Patentinhaber: Hexatronic GmbH, 22941 Bargteheide (DE)
(72) Erfinder: Erdorf, Stefan, 90574 Roßtal (DE)
(74) Vertreter: Lind Edlund Kenamets Intellectual Property AB

(56) Entgegenhaltungen:
- WO-A1-2005/018067
- CN-A- 110 238 144
- US-A1- 2004 090 064
- PARDESHI PRASANNA ET AL: "Installation of Optical Fiber Cable by Blowing / Jetting", 28 February 2015 (2015-02-28), XP055888407, Retrieved from the Internet <URL:https://www.stl.tech/optical-interconnect-products/optical-fibre-cable/pdf/Installation_of_optical_fiber_cable_by_blowing-final.pdf> [retrieved on 20220207]

## Beschreibung

Die vorliegende Erfindung betrifft eine Aufnahmeanordnung.

Weiterhin betrifft die Erfindung ein Telekommunikationssystem.

Um die gewünschten hohen Datenübertragungsraten zukünftig in Deutschland, aber auch weltweit zu erreichen, soll ein Glasfasernetz bis in einzelne Gebäude gebaut werden. Hierzu wird im allgemeinen zunächst ein Leerrohrnetz aus sogenannten Mikrokabelrohren installiert. Solche Rohre haben einen Außendurchmesser von ca. 7 bis 20 mm und verlaufen jeweils durchgehend von einem Verteilerkasten bis in das jeweilige Gebäude. Die Enden eines solchen Mikrokabelrohres werden mit einer Endkappe oder einer Einzelzugabdichtung verschlossen. Nach dem Abschluss dieser Verlegearbeiten werden unmittelbar oder zu einem späteren Zeitpunkt die Glasfaserkabel in die einzelnen Rohre mithilfe von Druckluft von 10 bis 15 bar eingeblasen. Hierfür benötigt das ausführende Unternehmen einen Mitarbeiter am Verteilerkasten, von dem aus das Kabel mithilfe eines Einlassgerätes in das Rohr eingeblasen wird, sowie einen weiteren Mitarbeiter im jeweiligen Gebäude, in dem das Rohr endet. Der Mitarbeiter entfernt dort den Rohrverschluss, nimmt das eingeblasene Kabel entgegen und spleisst einzelne Fasern in der Anschlussbox auf. Anschließend wird im Gebäude der Ringraum zwischen dem Rohr und dem Kabel druckdicht verschlossen. Am Verteilerkasten sind dann noch die entsprechenden Fasern mit dem Backbonekabel zu verbinden.

Nachteilig bei der vorstehend geschilderten Technik ist, dass während des Zeitraums des Einblasens des Kabels in das Rohr alle Anwohner den Zugang zu ihren jeweiligen Gebäuden ermöglichen müssen. Kann ein Zugang zu einem Gebäude nicht stattfinden, so muss das Einblasen mit erheblichen Mehrkosten nachgeholt werden.

"Installation of Optical Fiber Cable by Blowing / Jetting", von Pardeshi Prasanna et al, offenbart ein herkömmliches Einblasen von Telekommunikationskabeln ohne irgendeine spezifische Aufnahmeanordnung.

WO 2005/018067 offenbart das Einführen von Zugschnüren in eine Kabelröhre durch Saugen.

US 2004/090064 offenbart ein allgemeines Verbindersystem für Rohre.

Die Gebäude, deren Eigentümer noch keinen Glasfaserkabelanschluss beantragt haben, können noch nicht mit einem Kabel versorgt werden, da dort nur ein Leerrohr bis auf das Grundstück oder dessen Grenze verlegt wurde. Ein späterer Anschluss verursacht auch hier hohe Kosten, da der Einblasprozess nur für dieses eine Kabel vorzunehmen ist.

Hier setzt die Erfindung ein, die es sich zur Aufgabe gemacht hat, die vorstehend geschilderten Nachteile aus dem Stand der Technik zu überwinden und eine Aufnahmeanordnung für ein Kabelrohr zur Verfügung zu stellen, womit ein schnelles, fehlerfreies und kostengünstiges Einblasen in einem Arbeitsgang von Telekommunikationskabeln in die Kabelrohre, die zu den jeweiligen Gebäuden führen, möglich ist. Darüber hinaus soll die Aufnahmeanordnung einfach aufgebaut, kostengünstig bereitstellbar und einfach und sicher in der Handhabung bei der Installation des Telekommunikationskabels sein.

Eine weitere Aufgabe der Erfindung besteht darin, ein Telekommunikationssystem anzugeben und bereitzustellen, welches eine solche Aufnahmeanordnung für ein Kabelrohr umfasst.

Die Lösung der ersten Aufgabe erfolgt durch den Gegenstand des Anspruchs 1.

Es wurde im Rahmen der vorliegenden Erfindung erkannt, dass die Nachteile des Standes der Technik überwunden werden können, wenn vorgesehen ist, eine Aufnahmeanordnung wie folgt auszubilden:
die Aufnahmeanordnung für die Aufnahme eines Kabelrohrs, welches geeignet ist, ein Telekommunikationskabel aufzunehmen, umfasst ein Gehäusebasisteil, ein Kabelrohr mit einem ersten Ende und einem zweiten Ende, ein Winkelstück mit einem ersten Winkelstückende und einem zweiten Winkelstückende, wobei das Winkelstück an seinem ersten Winkelstückende mit dem zweiten Ende des Kabelrohrs verbunden ist, einem Reduzierverbindungsstück mit einem ersten Reduzierverbindungsstückende und einem zweiten Reduzierverbindungsstückende, wobei das Reduzierverbindungsstück an seinem ersten Reduzierverbindungsstückende mit dem zweiten Winkelstückende des Winkelstücks verbunden ist, einem Rohrstück mit einem ersten Rohrstückende und einem zweiten Rohrstückende, wobei das Rohrstück an seinem ersten Rohrstückende mit dem zweiten Reduzierverbindungsstückende des Reduzierverbindungsstücks verbunden ist, einem Ventilstück mit einem ersten Ventilstückende und einem zweiten Ventilstückende, wobei das Ventilstück an seinem ersten Ventilstückende mit dem zweiten Rohrstückende verbunden ist, und wobei das Gehäusebasisteil wenigstens einen Führungsabschnitt für das Kabelrohr und wenigstens einen Festlegeabschnitt für das Winkelstück und / oder wenigstens einen Festlegeabschnitt für das Reduzierverbindungsstück und / oder wenigstens einen Festlegeabschnitt für das Rohrstück und / oder wenigstens einen Festlegeabschnitt für das Ventilstück aufweist, und wobei das Gehäusebasisteil einen Aufnahmeraum für ein Fluid aufweist, wobei das zweite Ventilstückende derart in Bezug auf den Aufnahmeraum des Gehäusebasisteils angeordnet ist, dass aus dem zweiten Ventilstückende des Ventilstücks austretendes Fluid in den Aufnahmeraum des Gehäusebasisteils gelangt, und wobei ein durchgängiger Pfad durch das Kabelrohr, das Winkelstück, das Reduzierverbindungsstück, das Rohrstück und das Ventilstück ausgebildet ist, um darin zumindest abschnittsweise ein Telekommunikationskabel aufzunehmen.

Durch die erfindungsgemäße Aufnahmeanordnung kann eine einfache Installation des Telekommunikationskabels stattfinden. Hierzu kann ein Einblasvorgang genutzt werden, bei dem - ohne dass es Personal im Gebäude am gebäudeseitigen Ende des Kabelrohrs bedarf - das Telekommunikationskabel in der erforderlichen Länge bis zur Aufnahmeanordnung installiert wird.

Vor dem Einblasen des Telekommunikationskabels in das Kabelrohr wird ein Schwamm durch das Kabelrohr geblasen, der Schmutz mitnimmt, etwaig im Kabelrohr vorhandene Feuchtigkeit, wie beispielsweise Wassertropfen oder Wasseransammlungen, vor sich hertreibt und die Innenoberfläche des Kabelrohrs mit einem Gleitmittel versieht. Der Schwamm wird in dem Rohrstück der Aufnahmeanordnung an einem Schwammfänger aufgefangen. Das an das Rohrstück anschließende Ventilstück öffnet bei einem bestimmten Druck und lässt beim Blasvorgang die Luft entweichen.

Da sich in dem Kabelrohr Feuchtigkeit ansammeln kann, wird beim Blasvorgang diese Feuchtigkeit in Form beispielsweise von Wassertropfen oder Wasseransammlungen aus dem Ventilstück abgegeben.

Um eine Verschmutzung des umgebenden Raumes zu vermeiden, ist vorgesehen, dass dem zweiten Ventilstückende, aus dem die Feuchtigkeit austritt, ein Aufnahmeraum zugeordnet ist, in den das zweite Ventilstückende ein Stück weit hineinragt und so austretende Feuchtigkeit in den Aufnahmeraum gelangt und dort gesammelt wird.

Unmittelbar danach erfolgt das Einblasen des Telekommunikationskabels in das Kabelrohr. Das Kabelrohr ist in dem Gehäusebasisteil in mehreren Bögen verlegt, so dass das beim Einblasvorgang in diesem Abschnitt des Kabelrohrs gelangende Telekommunikationskabel durch Friktion an der Innenwand des Kabelrohrs abgebremst und schließlich gestoppt wird. Anschließend wird das Telekommunikationskabel aus dem Kabelrohr ein Stück weit herausgezogen und der Anschluss an die Gebäudeinfrastruktur kann hergestellt werden. Alternativ kann ein Abschnitt vom Ende des Kabelrohrs abgeschnitten werden, so dass das Telekommunikationskabel freiliegt und zum Anschluss bereitsteht.

Der Führungsabschnitt bzw. die Führungsabschnitte für das Kabelrohr können aber auch so gestaltet sein, dass das Kabelrohr bei Bedarf beispielsweise nach dem Einblasvorgang des Telekommunikationskabels in das Kabelrohr aus dem Gehäusebasisteil aus dem Führungsabschnitt herausnehmbar ist, um dann beispielsweise die notwendigen Anschlüsse des Telekommunikationskabels an die Gebäudeinfrastruktur herzustellen.

Das Reduzierverbindungsstück stellt einen Durchmesserübergang bereit, um von dem Kabelrohr mit geringen Innendurchmesser auf das Rohrstück mit größerem Innendurchmesser übergehen zu können. Typische Größenverhältnisse sind hierbei ein Innendurchmesser des Kabelrohrs von 10 mm und ein Innendurchmesser des Rohrstücks von 16 mm, so dass das Reduzierverbindungsstück diesen Durchmesserübergang vermittelt.

Der Vorteil hierbei ist, dass der Schwamm, der vor dem Einblasen des Telekommunikationskabels durch das Kabelrohr geblasen wird und dieses säubert und mit einem Gleitmittel versieht, in dem Rohrstück an einem Schwammfänger aufgefangen werden kann, wobei die zum Blasen benötigte Luft dann im Rohrstück bei größerem Durchmesser an dem aufgefangenen Schwamm vorbeistreichen kann.

Das Halteelement für die Kabelrohrüberlänge ist lösbar ausgebildet. Mit Vorteil kann dazu ein Klettband oder ein Kabelbinder oder ein Band mit einem Verschluss herangezogen werden. Das Halteelement sichert die Kabelrohrüberlänge solange, bis diese bei der abschließenden Installation benötigt wird. Wenn die Kabelrohrüberlänge bei der abschließenden Installation benötigt wird, kann das Halteelement gelöst werden und die Kabelrohrüberlänge dann vom Gehäusebasisteil abgenommen werden. Nach Lösen der Verbindung, z. B. einer Steckverbindung zum Rohrstück oder / oder zum Hausanschlussrohr, wird das Telekommunikationskabel zur anschließenden Installation verwendet.

In einer alternativen Ausführungsweise der Aufnahmeanordnung kann vorgesehen sein, dass anstelle des Ventilstücks gemäß obiger Beschreibung eine Kombination aus einem Übergangsstück und einem Ventilstück vorliegt.

Durch diese Maßnahme kann in einfacher Weise auf verschiedene Durchmesser des Rohrstücks reagiert werden.

Es ist bei dieser Ausführung vorgesehen, dass das Übergangsstück ein erstes Übergangsstückende und ein zweites Übergangsstückende aufweist, wobei das Übergangsstück an seinem ersten Übergangsstückende mit dem zweiten Rohrstückende des Rohrstücks verbunden ist, und das Übergangsstück an seinem zweiten Übergangsstückende mit dem ersten Ventilstückende des Ventilstücks verbunden ist.

In einer bevorzugten Ausbildung der Erfindung kann vorgesehen sein, dass die Aufnahmeanordnung derart ausgebildet ist, dass die Verbindung zwischen dem Kabelrohr und dem Winkelstück und / oder die Verbindung zwischen dem Winkelstück und dem Reduzierverbindungsstück und / oder die Verbindung zwischen dem Reduzierverbindungsstück und dem Rohrstück und / oder die Verbindung zwischen dem Rohrstück und dem Ventilstück fluiddicht ausgebildet ist.

Durch die fluiddichte Ausbildung der Verbindung zwischen dem Kabelrohr und dem Winkelstück und / oder die Verbindung zwischen dem Winkelstück und dem Reduzierverbindungsstück und / oder die Verbindung zwischen dem Reduzierverbindungsstück und dem Rohrstück und / oder die Verbindung zwischen dem Rohrstück und dem Ventilstück ist es in einfacher Weise möglich, das Telekommunikationskabel in das Kabelrohr einzublasen, wobei der Hausanschluss vor und nach dem Einblasen abgedichtet ist.

In einer Ausführung der Aufnahmeanordnung, bei der statt des Ventilstücks ein Übergangsstück und ein Ventilstück ausgebildet sind, die miteinander verbunden sind, gilt auch hier, dass diese eine fluiddichte Verbindung miteinander aufweisen.

Es kann sich bei der vorliegenden Erfindung als überaus vorteilhaft erweisen, wenn vorgesehen ist, dass die Aufnahmeanordnung so gestaltet ist, dass in dem Rohrstück ein Schwammfänger aufgenommen ist.

Durch die Aufnahme eines Schwammfängers im Rohrstück kann die Reinigung und die Einbringung eines Gleitmittels in das Kabelrohr in einfacher und schneller Weise mit Hilfe eines Schwamms erfolgen, der nachdem er durch das Kabelrohr geblasen wurde, im Rohrstück mit Hilfe des Schwammfängers aufgefangen wird.

Der Schwammfänger kann als langgestrecktes Extrusionsprofilteil oder als Spritzgussteil ausgebildet sein, das einzelne Rippen, die etwa parallel zueinander liegen, aufweist, die etwa senkrecht zu ihrer etwa parallelen Ausrichtung untereinander verbunden sind.

Auf diese Weise ist eine Art "Sieb" ausgebildet, das in der Lage ist, einen Schwamm aufzufangen und die zum Blasen notwendige Luft vorbeistreichen zu lassen.

Eine günstige Fortentwicklung der vorliegenden Erfindung kann darin liegen, vorzusehen, dass die Aufnahmeanordnung so auszubilden ist, dass dem Aufnahmeraum des Gehäusebasisteils ein Deckel zugeordnet ist.

Ein solcher Deckel, der dem Aufnahmeraum des Gehäusebasisteils zugeordnet ist, kann einerseits verhindern, dass aus dem Ventilstückende austretendes Fluid unerwünscht in den Raum geblasen wird, andererseits kann ein solcher Deckel das Ventilstück stützen und so den Aufbau der Aufnahmeanordnung insgesamt stabilisieren.

Bei der vorliegenden Erfindung kann es sich als überaus günstig erweisen, wenn vorgesehen ist, die Aufnahmeanordnung so zu ergänzen, dass ein mit dem Gehäusebasisteil verbindbares Gehäusedeckelteil bereitgestellt ist.

Durch die Bereitstellung eines mit dem Gehäusebasisteil verbindbaren Gehäusedeckelteils kann die Aufnahmeanordnung vor Beschädigung, Verschmutzung und unerwünschter Manipulation geschützt werden. Ein solches Gehäusedeckelteil kann beispielsweise auch abschließbar ausgeführt sein und so eine hohe Schutzwirkung entfalten.

Die Aufnahmeanordnung gemäß vorliegender Erfindung kann in äußerst vorteilhafter Weise fortgebildet sein, wenn vorgesehen ist, dass das Gehäusebasisteil und / oder das Gehäusedeckelteil und / oder das Kabelrohr und / oder das Winkelstück und / oder das Reduzierverbindungsstück und / oder das das Rohrstück und / oder das Ventilstück und / oder der Deckel aus einem Polymermaterial besteht oder ein solches enthält oder dass das Gehäusebasisteil und / oder das Gehäusedeckelteil und / oder das Kabelrohr und / oder das Winkelstück und / oder das Reduzierverbindungsstück und / oder das das Rohrstück und / oder das Ventilstück und / oder der Deckel aus einem Metall besteht oder ein solches enthält.

Bewähren kann sich hierbei, wenn das Polymermaterial ausgewählt ist aus einem Polyolefin, insbesondere aus einem Polyethylen, einem vernetzten Polyethylen oder einem verstärkten Polyethylen, oder insbesondere aus einem Polypropylen, einem verstärkten Polypropylen, einem Poycarbonat, einem Polyamid, einem Polyester, einem Acrylnitril-Butadien-Styrol, einem Polysulfon, einem Blend oder einer Mischzusammensetzung der Vorgenannten, und dass das Metall ausgewählt ist aus Messing, aus Stahl, aus Aluminium oder aus Bronze oder aus einer auf den Vorgenannten basierenden Mischzusammensetzung oder Legierung.

Gleiches gilt, wenn in einer alternativen Ausführung der Erfindung vorgesehen ist, dass anstelle des Ventilstücks gemäß obiger Beschreibung eine Kombination aus einem Übergangsstück und einem Ventilstück vorliegt. Auch hier ist das Übergangsstück und / oder das Ventilstück aus dem oben genannten Material oder enthält ein solches.

Die vorstehend bezeichneten Polymermaterialien und die Metalle sind für den Eiinsatzzweck inert, resistent, langlebig, widerstandsfähig, vergleichsweise einfach verarbeitbar, schlagfest, flexibel und kostengünstig.

Es versteht sich, dass die Herstellung der vorstehend genannten Teile in einem Verfahren der Polymerverarbeitung, wie beispielsweise des Spritzgussverfahrens, des Extrusionsverfahrens, des Thermoformungsverfahrens oder anderer, bzw. in einem 3D-Druck-Verfahren für Polymermaterialien, oder in einem Verfahren zur Metallbearbeitung, wie beispielsweise einem Drehverfahren, einem Gussverfahren, einem Schmiedeverfahren oder anderer, bzw. in einem 3D-Druckverfahren für Metalle, möglich ist.

Die zweite Aufgabe der vorliegenden Erfindung, die Bereitstellung eines Telekommunikationssystems, erfährt ihre Lösung durch den Gegenstand des Anspruchs 8.

Es wurde erkannt, dass ein Telekommunikationssystem mit einer Aufnahmeanordnung gemäß vorstehender Beschreibung, wobei in der Aufnahmeanordnung zumindest im Kabelrohr abschnittsweise ein Telekommunikationskabel aufgenommen ist, die Aufgabe vollständig löst.

Verwendung findet die erfindungsgemäße Aufnahmeanordnung überall dort, wo Telekommunikationskabel zu installieren sind. Dies betrifft die Kommunikationsinfrastruktur, insbesondere die von Privathaushalten, von öffentlichen Einrichtungen der Verwaltung, der Bildung, des Verkehrswesens, aber auch der Industrie.

Weitere wichtige Merkmale und Vorteile der Erfindung ergeben sich aus den Unteransprüchen, aus den Figuren und aus der zugehörigen Figurenbeschreibung. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Figuren dargestellt und werden in der nachfolgenden Beschreibung näher erläutert, wobei sich gleiche Bezugszeichen auf gleiche oder funktional gleiche oder ähnliche Bauteile beziehen.

Nachfolgend werden Ausführungsbeispiele der Erfindung anhand der beigefügten Zeichnungen näher erläutert.

Es zeigt:
- Fig. 1: eine dreidimensionale Darstellung eines ersten Ausführungsbeispiels einer erfindungsgemäßen Aufnahmeanordnung;
- Fig. 2: eine dreidimensionale Darstellung eines Abschnitts einer erfindungsgemäßen Aufnahmeanordnung eines zweiten Ausführungsbeispiels;
- Fig. 3: eine dreidimensionale Darstellung eines Schwammfängers.

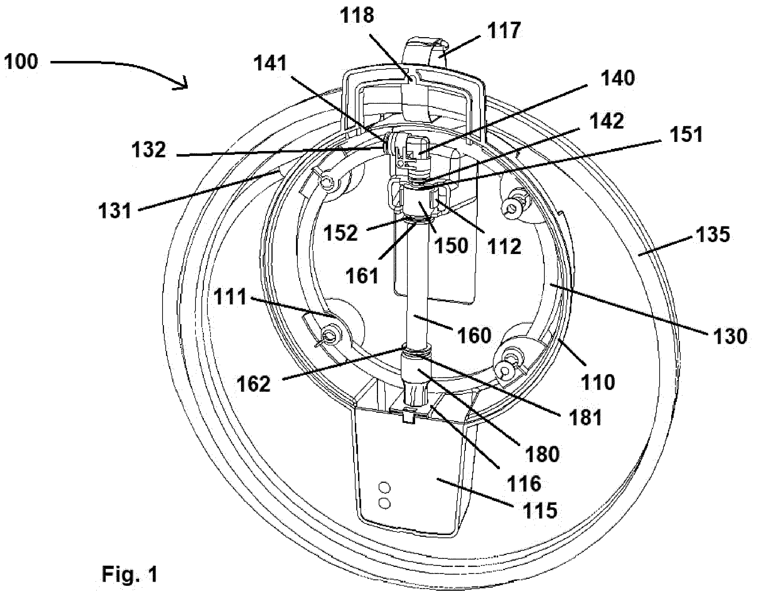

In der Fig. 1 ist in einer dreidimensionalen Darstellung ein erstes Ausführungsbeispiel einer erfindungsgemäßen Aufnahmeanordnung 100 gezeigt.

Die Aufnahmeanordnung 100 für die Aufnahme eines Kabelrohrs 130, welches geeignet ist, ein Telekommunikationskabel aufzunehmen, umfasst ein Gehäusebasisteil 110, ein Kabelrohr 130, ein Winkelstück 140, ein Reduzierverbindungsstück 150, ein Rohrstück 160 und ein Ventilstück 180.

Das Kabelrohr 130 weist ein erstes Ende 131 und ein zweites Ende 132 auf.

Das Winkelstück 140 weist ein erstes Winkelstückende 141 und ein zweites Winkelstückende 142 auf.

Das Reduzierverbindungsstück 150 weist ein erstes Reduzierverbindungsstückende 151 und ein zweites Reduzierverbindungsstückende 152 auf.

Das Rohrstück 160 weist ein erstes Rohrstückende 161 und ein zweites Rohrstückende 162 auf.

Das Ventilstück 180 weist ein erstes Ventilstückende 181 und ein zweites Ventilstückende - das hier nicht abgebildet ist - auf.

Das Winkelstück140 ist an seinem ersten Winkelstückende 141 mit dem zweiten Ende 132 des Kabelrohrs 130 verbunden.

Das Reduzierverbindungsstück 150 ist an seinem ersten Reduzierverbindungsstückende 151 mit dem zweiten Winkelstückende 142 des Winkelstücks 140 verbunden.

Das Rohrstück 160 ist an seinem ersten Rohrstückende 161 mit dem zweiten Reduzierverbindungsstückende 152 des Reduzierverbindungsstücks 150 verbunden.

Das Ventilstück 180 ist an seinem ersten Ventilstückende 181 mit dem zweiten Rohrstückende 162 des Rohrstücks 160 verbunden.

Alle vorstehend genannten Verbindungen sind fluiddicht ausgebildet.

Das Kabelrohr 130 ist in dem Gehäusebasisteil 110 in mehreren Bögen verlegt, so dass das beim Einblasvorgang in diesem Abschnitt des Kabelrohrs 130 gelangende Telekommunikationskabel durch Friktion an der Innenwand des Kabelrohrs 130 abgebremst und schließlich gestoppt wird bzw. spätestens im Winkelstück 140, durch das eine Richtungsänderung des Pfads um etwa 90 ° vorgegeben ist, dort anschlägt und gestoppt wird.

Das Gehäusebasisteil 110 stellt wenigstens einen Führungsabschnitt 111 für das Kabelrohr 130 und wenigstens einen Festlegeabschnitt 112 für das Winkelstück 140 und / oder wenigstens einen Festlegeabschnitt 112 für das Reduzierverbindungsstück 150 und / oder wenigstens einen Festlegeabschnitt 112 für das Rohrstück 160 und / oder wenigstens einen Festlegeabschnitt 112 für das Ventilstück 180 bereit, wovon in der Fig.1 allerdings nur der Festlegeabschnitt 112 für das Reduzierverbindungsstück 150 gezeigt ist.

Bei der erfindungsgemäßen Aufnahmeanordnung sind vier Führungsabschnitte 111 ausgebildet, es versteht sich, dass auch eine andere Anzahl möglich ist. Die Führungsabschnitte 111 sind so gestaltet, dass das Kabelrohr 130 aus dem Gehäusebasisteil 110 bei Bedarf entnehmbar ist.

Das Gehäusebasisteil 110 weist einen Aufnahmeraum 115 für ein Fluid auf, der in Form eines bauchigen Behälters ausgebildet ist.

Das zweite Ventilstückende des Ventilstücks 180, das in der Fig. 1 nicht gezeigt ist, ist derart in Bezug auf den Aufnahmeraum 115 des Gehäusebasisteils 110 angeordnet, dass aus dem zweiten Ventilstückende des Ventilstücks 180 austretendes Fluid in den Aufnahmeraum 115 des Gehäusebasisteils 110 gelangt.

Durch einen Deckel 116, der den Aufnahmeraum 115 des Gehäusebasisteils 110 zumindest abschnittsweise bedeckt, ist das Ventilstück 180 fixiert, was der Aufnahmeanordnung 100 eine hohe Stabilität verleiht.

Ein durchgängiger Pfad durch das Kabelrohr 130, das Winkelstück 140, das Reduzierverbindungsstück 150, das Rohrstück 160 und das Ventilstück 180 ist ausgebildet, um darin zumindest abschnittsweise ein Telekommunikationskabel aufzunehmen.

Das Gehäusebasisteil 110 kann durch eine Wandbefestigungseinrichtung 118 an einer Gebäudewand, beispielsweise durch Anschrauben, befestigt werden.

Das Kabelrohr 130 ist an seinem ersten Ende 131 mit einer Kabelrohrüberlänge 135 fluiddicht verbunden.

Die Kabelrohrüberlänge 135 ist in mehreren Bögen um das Gehäusebasisteil 110 herumgelegt und durch ein Halteelement 117, das beispielsweise in Form eines Klettbandes oder eines Kabelbinders oder eines Bandes mit einem Verschluss ausgebildet ist, gesichert.

Das Halteelement 117 sichert die Kabelrohrüberlänge 135 solange, bis diese bei der abschließenden Installation benötigt wird.

An die Kabelrohrüberlänge 135 wird das Kabelrohr zu einem Verteiler oder zu der Zentrale angeschlossen, was hier nicht gezeigt ist.

Bei allen Beschreibungen des Einblasvorgangs ist unter "Kabelrohr" stets zu verstehen das Gebilde, welches das Kabelrohr 130 der Aufnahmeanordnung 100, die Kabelrohrüberlänge 135 und das zum Verteiler oder zur Zentrale führende Kabelrohr umfasst.

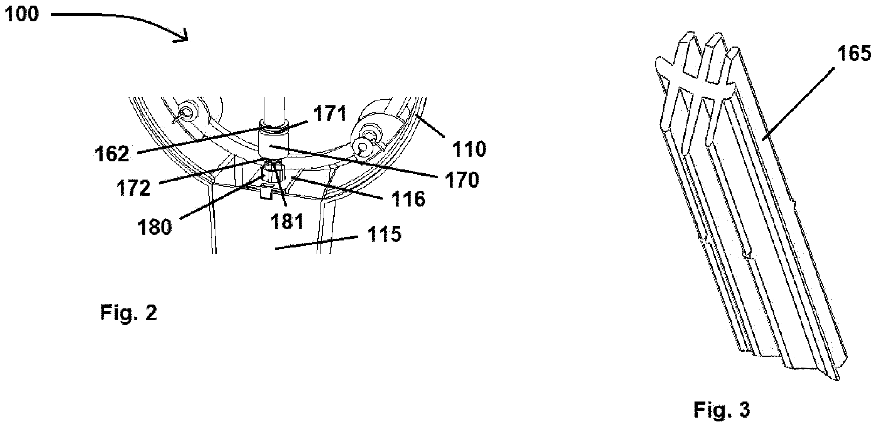

In der Fig. 2 ist in einer dreidimensionalen Darstellung ein Abschnitt einer erfindungsgemäßen Aufnahmeanordnung 100 eines zweiten Ausführungsbeispiels gezeigt.

Die Bezugszeichen in der Fig. 2 entsprechen denen aus der Fig. 1.

In der Fig. 2 ist ein Abschnitt der erfindungsgemäßen Aufnahmeanordnung 100 gezeigt, aus dem hervorgeht, dass anstelle des Ventilstücks 180 aus der Fig.1 eine Kombination aus einem Übergangsstück 170 und einem Ventilstück 180 vorliegt.

Durch diese Maßnahme kann in einfacher Weise auf verschiedene Durchmesser des Rohrstücks 160 reagiert werden.

Es ist bei dieser Ausführung vorgesehen, dass das Übergangsstück 170 ein erstes Übergangsstückende 171 und ein zweites Übergangsstückende 172 aufweist, wobei das Übergangsstück 170 an seinem ersten Übergangsstückende 171 mit dem zweiten Rohrstückende 162 des Rohrstücks 160 verbunden ist, und das Übergangsstück 170 an seinem zweiten Übergangsstückende 172 mit dem ersten Ventilstückende 181 des Ventilstücks 180 verbunden ist.

Das zweite Ausführungsbeispiel der erfindungsgemäßen Aufnahmeanordnung 100 unterscheidet sich sonst nicht weiter vom ersten Ausführungsbeispiel, wie es in der Fig. 1 beschrieben ist.

In der Fig. 3 ist eine dreidimensionale Darstellung eines Schwammfängers 165 gezeigt. Der Schwammfänger 165 ist im Rohrstück 160 aufgenommen.

Der Schwammfänger 165 ist als langgestrecktes Extrusionsprofilteil oder als Spritzgussteil ausgebildet, das einzelne Rippen, die etwa parallel zueinander liegen, aufweist, die etwa senkrecht zu ihrer etwa parallelen Ausrichtung untereinander verbunden sind.

Auf diese Weise ist eine Art "Sieb" ausgebildet, das in der Lage ist, einen Schwamm, der durch das Kabelrohr 130 geblasen wird und diese reinigt und geleichzeitig mit einem Gleitmittel versieht, aufzufangen und die zum Blasen notwendige Luft vorbeistreichen lässt.

### Bezugszeichenliste

- 100: Aufnahmeanordnung
- 110: Gehäusebasisteil
- 111: Führungsabschnitt
- 112: Festlegeabschnitt
- 115: Aufnahmeraum
- 116: Deckel
- 117: Halteelement
- 118: Wandbefestigungseinrichtung
- 120: Gehäusedeckelteil
- 130: Kabelrohr
- 131: erstes Ende
- 132: zweites Ende
- 135: Kabelrohrüberlänge
- 140: Winkelstück
- 141: erstes Winkelstückende
- 142: zweites Winkelstückende
- 150: Reduzierverbindungsstück
- 151: erstes Reduzierverbindungsstückende
- 152: zweites Reduzierverbindungsstückende
- 160: Rohrstück
- 161: erstes Rohrstückende
- 162: zweites Rohrstückende
- 165: Schwammfänger
- 170: Übergangsstück
- 171: erstes Übergangsstückende
- 172: zweites Übergangsstückende
- 180: Ventilstück
- 181: erstes Ventilstückende

## Patentansprüche

1. Aufnahmeanordnung (100) für die Aufnahme eines Kabelrohrs (130), welches geeignet ist, ein Telekommunikationskabel (190) aufzunehmen, **dadurch gekennzeichnet dass** die Aufnahmeanordnung (100) ein Gehäusebasisteil (110) umfasst, und ferner ein Kabelrohr (130) mit einem ersten Ende (131) und einem zweiten Ende (132), ein Winkelstück (140) mit einem ersten Winkelstückende (141) und einem zweiten Winkelstückende (142), wobei das Winkelstück (140) an seinem ersten Winkelstückende (141) mit dem zweiten Ende (132) des Kabelrohrs (130) verbunden ist, einem Reduzierverbindungsstück (150) mit einem ersten Reduzierverbindungsstückende (151) und einem zweiten Reduzierverbindungsstückende (152), wobei das Reduzierverbindungsstück (150) an seinem ersten Reduzierverbindungsstückende (151) mit dem zweiten Winkelstückende (142) des Winkelstücks (140) verbunden ist, einem Rohrstück (160) mit einem ersten Rohrstückende (161) und einem zweiten Rohrstückende (162), wobei das Rohrstück (160) an seinem ersten Rohrstückende (161) mit dem zweiten Reduzierverbindungsstückende (152) des Reduzierverbindungsstücks (150) verbunden ist, einem Ventilstück (180) mit einem ersten Ventilstückende (181) und einem zweiten Ventilstückende, wobei das Ventilstück (180) an seinem ersten Ventilstückende (181) mit dem zweiten Rohrstückende (162) verbunden ist, und wobei das Gehäusebasisteil (110) wenigstens einen Führungsabschnitt (111) für das Kabelrohr (130) und wenigstens einen Festlegeabschnitt (112) für das Winkelstück (140) und / oder wenigstens einen Festlegeabschnitt (112) für das Reduzierverbindungsstück (150) und / oder wenigstens einen Festlegeabschnitt (112) für das Rohrstück (160) und / oder wenigstens einen Festlegeabschnitt (112) für das Ventilstück (180) aufweist, und wobei das Gehäusebasisteil (110) einen Aufnahmeraum (115) für ein Fluid aufweist, wobei das zweite Ventilstückende derart in Bezug auf den Aufnahmeraum (115) des Gehäusebasisteils (110) angeordnet ist, dass aus dem zweiten Ventilstückende des Ventilstücks (180) austretendes Fluid in den Aufnahmeraum (115) des Gehäusebasisteils (110) gelangt, und wobei ein durchgängiger Pfad durch das Kabelrohr (130), das Winkelstück (140), das Reduzierverbindungsstück (150), das Rohrstück (160) und das Ventilstück (180) ausgebildet ist, um darin zumindest abschnittsweise ein Telekommunikationskabel (190) aufzunehmen.

2. Aufnahmeanordnung (100) nach Anspruch 1, **dadurch gekennzeichnet, dass** die Verbindung zwischen dem Kabelrohr (130) und dem Winkelstück (140) und / oder die Verbindung zwischen dem Winkelstück (140) und dem Reduzierverbindungsstück (150) und / oder die Verbindung zwischen dem Reduzierverbindungsstück (150) und dem Rohrstück (160) und / oder die Verbindung zwischen dem Rohrstück (160) und dem Ventilstück (180) fluiddicht ausgebildet ist.

3. Aufnahmeanordnung (100) nach einem der Ansprüche 1 oder 2, **dadurch gekennzeichnet, dass** in dem Rohrstück (160) ein Schwammfänger (165) aufgenommen ist.

4. Aufnahmeanordnung (100) nach einem der vorangehenden Ansprüche, **dadurch gekennzeichnet, dass** dem Aufnahmeraum (115) des Gehäusebasisteils (110) ein Deckel (116) zugeordnet ist.

5. Aufnahmeanordnung (100) nach einem der vorangehenden Ansprüche, **dadurch gekennzeichnet, dass** ein mit dem Gehäusebasisteil (110) verbindbares Gehäusedeckelteil bereitgestellt ist.

6. Aufnahmeanordnung (100) nach einem der vorangehenden Ansprüche, **dadurch gekennzeichnet, dass** das Gehäusebasisteil (110) und / oder das Gehäusedeckelteil (120) und / oder das Kabelrohr (130) und / oder das Winkelstück (140) und / oder das Reduzierverbindungsstück (150) und / oder das das Rohrstück (160) und / oder das Ventilstück (180) und / oder der Deckel (115) aus einem Polymermaterial besteht oder ein solches enthält oder dass das Gehäusebasisteil (110) und / oder das Gehäusedeckelteil (120) und / oder das Kabelrohr (130) und / oder das Winkelstück (140) und / oder das Reduzierverbindungsstück (150) und / oder das das Rohrstück (160) und / oder das Ventilstück (180) und / oder der Deckel (115) aus einem Metall besteht oder ein solches enthält.

7. Aufnahmeanordnung (100) nach Anspruch 6, **dadurch gekennzeichnet, dass** das Polymermaterial ausgewählt ist aus einem Polyolefin, insbesondere aus einem Polyethylen, einem vernetzten Polyethylen oder einem verstärkten Polyethylen, oder insbesondere aus einem Polypropylen, einem verstärkten Polypropylen, einem Poycarbonat, einem Polyamid, einem Polyester, einem Acrylnitril-Butadien-Styrol, einem Polysulfon, einem Blend oder einer Mischzusammensetzung der Vorgenannten, und dass das Metall ausgewählt ist aus Messing, aus Stahl, aus Aluminium oder aus Bronze oder aus einer auf den Vorgenannten basierenden Mischzusammensetzung oder Legierung.

8. Telekommunikationssystem mit einer Aufnahmeanordnung (100) nach einem der Ansprüche 1 bis 7, wobei in der Aufnahmeanordnung (100) zumindest im Kabelrohr (130) abschnittsweise ein Telekommunikationskabel aufgenommen ist.

## Claims

1. A receiver arrangement (100) for receiving a cable tube (130) which is configured to receive a Telecommunication cable (190), **characterized in that** the receiving arrangement (100) comprises:
a housing base (110), and further away
a cable tube (130) with a first end (131) and a second end (132),
an elbow (140) with a first elbow end (141) and a second elbow end (142), wherein the elbow (140) at its first elbow end (141) is connected to the second end (132) of the cable tube (130),
a reducer (150) with a first reducer end (151) and a second reducer end (152), wherein the reducer (150) at its first reducer end (151) is connected to the second elbow end (142) of the elbow (140),
a tube piece (160) with a first tube piece end (161) and a second tube piece end (162), wherein the tube piece (160) is connected at its first tube piece end (161) with the second reducer end (152) of the reducer (150),
an valve piece (180) with a first valve piece end (181) and a second valve piece end (182), wherein the valve piece (180) is connected at its first valve piece end (181) to the second tube piece end (162), and wherein the housing base (110) comprises at least one guide section (111) for the cable tube (130) and at least one mounting section (112) for the elbow (140) and/or at least one mounting section (112) for the reducer (150) and/or at least one mounting section (112) for the tube piece (160) and/or at least one mounting section (112) for the valve piece (180), and wherein the housing base (110) comprises a receiving space (115) for a fluid, wherein the second valve piece end is arranged in relation to the receiving space (115) of the housing base (110) such that fluid exiting the second valve piece end (180) enters the receiving space (115) of the housing base (110), and wherein a continuous path is formed through the cable tube (130), the elbow (140), the reducer (150), the tube piece (160) and the valve piece (180), in order to, at least in sections of the continuous path, receive a telecommunication cable (190).

2. A receiver arrangement (100) according to claim 1, **characterized in that** the connection between the cable tube (130) and the elbow (140) and/or the connection between the elbow (140) and the reducer (150) and/or the connection between the reducer (150) and the tube piece (160) and/or the connection between the tube piece (160) and the valve piece (180) is formed liquid tight.

3. A receiver arrangement (100) according to claim 1 or 2, **characterized in that** a sponge catcher (165) is arranged in the tube piece (160).

4. A receiver arrangement (100) according to any of the preceding claims, **characterized in that** the receiving space (115) of the housing base (110) is provided with a lid (116).

5. A receiver arrangement (100) according to any of the preceding claims, **characterized in that** the receiver arrangement comprises a housing cover which is connectable to the housing base (110).

6. A receiver arrangement (100) according to any of the preceding claims, **characterized in that** the housing base (110) and/or the housing cover (120) and/or the cable tube (130), and/or the elbow (140), and/or the reducer (150), and/or the tube piece (160) and/or the valve piece (180) and/or the lid (115) consist of a polymer material or contain such a material, or **in that** the housing base (110) and/or the housing cover (120) and/or the cable tube (130), and/or the elbow (140), and/or the reducer (150), and/or the tube piece (160) and/or the valve piece (180) and/or the lid (115) consist of a metal or contain a metal.

7. A receiver arrangement (100) according to claim 6, **characterized in that** the polymer material is selected from a polyolefin, especially from a polyethylene, a cross-linked polyethylene or a reinforced polyethylene, or especially from a polypropylene, a reinforced polypropylene, a polycarbonate, a polyamide, a polyester, an acrylonitrile butadiene styrene, a polysulfone, a blend or mixture composition of any one of the above-mentioned polymer materials, and **in that** the metal is selected from brass, steel, aluminium, or bronze, or a mixture composition or alloy of one of the above-mentioned metals.

8. A telecommunication system with a receiver arrangement (100) according to any of claims 1 to 7, in which, in the receiver arrangement (100), at least in the tube piece (130), a telecommunication cable is partially received.

## Revendications

1. Dispositif de réception (100) pour la réception d'un tube de câble (130), qui est adapté pour recevoir un câble de télécommunication (190), **caractérisé en ce que** le dispositif de réception (100) comprend une pièce de base de boîtier (110), et comprend en outre un tube de câble (130) ayant une première extrémité (131) et une seconde extrémité (132), un coude (140) avec une première extrémité de coude (141) et une seconde extrémité de coude (142), le coude (140) étant relié par sa première extrémité de coude (141) à la seconde extrémité (132) du tube de câble (130), un raccord réducteur (150) ayant une première extrémité de raccord réducteur (151) et une seconde extrémité de raccord réducteur (152), le raccord réducteur (150) étant relié par sa première extrémité de raccord réducteur (151) à la seconde extrémité de coude (142) du coude (140), une pièce tubulaire (160) ayant une première extrémité de pièce tubulaire (161) et une seconde extrémité de pièce tubulaire (162), la pièce tubulaire (160) étant raccordée par sa première extrémité (161) à la seconde extrémité de raccord réducteur (152) du raccord réducteur (150), une pièce de soupape (180) ayant une première extrémité de pièce de soupape (181) et une seconde extrémité de pièce de soupape, la pièce de soupape (180) étant reliée par sa première extrémité de pièce de soupape (181) à la seconde extrémité de pièce tubulaire (162), et la pièce de base de boîtier (110) comprenant au moins une section de guidage (111) pour le tube de câble (130) et au moins une section de fixation (112) pour le coude (140) et/ou au moins une section de fixation (112) pour le raccord réducteur (150) et/ou au moins une section de fixation (112) pour la pièce tubulaire (160) et/ou au moins une section de fixation (112) pour la pièce de soupape (180), et la pièce de base de boîtier (110) présentant un espace de réception (115) pour un fluide, la seconde extrémité de soupape étant disposée par rapport à l'espace de réception (115) de la pièce de base de boîtier (110) de telle sorte que le fluide s'échappant de la seconde extrémité de pièce de soupape de la pièce de soupape (180) pénètre dans l'espace de réception (115) de la pièce de base de boîtier (110), et un passage continu à travers le tube de câble (130), le coude (140), le raccord réducteur (150), la pièce tubulaire (160) et la pièce de soupape (180), afin d'y recevoir au moins par sections un câble de télécommunication (190).

2. Dispositif de réception (100) selon la revendication 1, **caractérisé en ce que** la liaison entre le tube de câble (130) et le coude (140) et/ou la liaison entre le coude (140) et le raccord réducteur (150) et/ou la liaison entre le raccord réducteur (150) et la pièce tubulaire (160) et/ou la liaison entre la pièce tubulaire (160) et la pièce de soupape (180) est réalisée de manière étanche aux fluides.

3. Dispositif de réception (100) selon l'une quelconque des revendications 1 ou 2, **caractérisé en ce qu'**un récupérateur en éponge (165) est logé dans la pièce tubulaire (160).

4. Dispositif de réception (100) selon l'une quelconque des revendications précédentes, **caractérisé en ce qu'**un couvercle (116) est associé à l'espace de réception (115) de la pièce de base de boîtier (110).

5. Dispositif de réception (100) selon l'une quelconque des revendications précédentes, **caractérisé en ce qu'**il est prévu une pièce de couvercle de boîtier qui peut être reliée à la pièce de base de boîtier (110).

6. Dispositif de réception (100) selon l'une quelconque des revendications précédentes, **caractérisé en ce que** la pièce de base de boîtier (110) et/ou la pièce de couvercle de boîtier (120) et/ou le tube de câble (130) et/ou le coude (140) et/ou le raccord réducteur (150) et/ou le tube (160) et/ou la pièce de soupape (180) et/ou le couvercle (115) sont constitués d'un matériau polymère ou contiennent un matériau polymère ou la pièce de base de boîtier (110) et/ou que la pièce de couvercle de boîtier (120) et/ou le tube de câble (130) et/ou le coude (140) et/ou le raccord réducteur (150) et/ou la pièce tubulaire (160) et/ou la pièce de soupape (180) et/ou le couvercle (115) sont en métal ou en contiennent un.

7. Dispositif de réception (100) selon la revendication 6, **caractérisé en ce que** le matériau polymère est choisi parmi une polyoléfine, en particulier parmi un polyéthylène, un polyéthylène réticulé ou un polyéthylène renforcé, ou en particulier parmi un polypropylène, un polypropylène renforcé, un polycarbonate, un polyamide, un polyester, un acrylonitrile butadiène styrène, un polysulfone, un mélange ou une composition mixte de ceux-ci, et **en ce que** le métal est choisi parmi le laiton, l'acier, l'aluminium ou le bronze ou parmi une composition ou un alliage mixte à base de ceux-ci.

8. Système de télécommunication avec un dispositif de réception (100) selon l'une quelconque des revendications 1 à 7, dans lequel, dans le dispositif de réception (100), au moins dans le conduit de câble (130), un câble de télécommunication est partiellement reçu.
